**Europäisches Patentamt**

**European Patent Office**

**Office européen des brevets**

(19)

(11) Veröffentlichungsnummer: **0 042 559**

**A1**

(12)

# EUROPÄISCHE PATENTANMELDUNG

(21) Anmeldenummer: **81104551.7**

(22) Anmeldetag: **12.06.81**

(51) Int. Cl.³: **G 09 B 29/06**

(30) Priorität: **21.06.80 DE 3023260**

(43) Veröffentlichungstag der Anmeldung:
**30.12.81 Patentblatt 81/52**

(84) Benannte Vertragsstaaten:
**AT BE CH DE FR GB IT LI LU NL SE**

(71) Anmelder: **Galanti, Wolf**
**Saloni 47**
**I-30015 Chioggia(IT)**

(71) Anmelder: **Galanti, Bruno**
**Dr.-Tröltsch-Strasse 13 a**
**D-8900 Augsburg(DE)**

(72) Erfinder: **Galanti, Wolf**
**Saloni 47**
**I-30015 Chioggia(IT)**

(72) Erfinder: **Galanti, Bruno**
**Dr.-Tröltsch-Strasse 13 a**
**D-8900 Augsburg(DE)**

(74) Vertreter: **Munk, Ludwig, Dipl.-Ing.**
**Prinzregentenstrasse 1**
**D-8900 Augsburg(DE)**

(54) **Vorrichtung zur Aufnahme eines Informationsträgers.**

(57) Bei einer Vorrichtung zur Aufnahme eines Informationsträgers, wie einer topographischen Karte oder dergleichen, der auf zwei in einem Gehäuse angeordneten Wickelwalzen (6) aufgenommen ist und an einem Sichtfenster (12) vorbeigeführt wird, läßt sich dadurch eine einfache Handhabung und eine große Vielseitigkeit erreichen, daß das den Informationsträger (5) aufnehmende Gehäuse als Kassette (7) ausgebildet ist, die in einen mit solchen Kassetten wahlweise beschickbaren, in einem Fahrzeug im Sichtbereich des Fahrzeuglenkers angeordneten Kassettenhalter (19) einlegbar ist, der mit einem Kassettenaufnahmeraum (20) und einer mit den Wickelwalzen (6) der jeweils eingelegten Kassette (7) kuppelbaren Antriebseinrichtung versehen ist.

FIG 2

EP 0 042 559 A1

Vorrichtung zur Aufnahme eines Informationsträgers

Die Erfindung betrifft eine Vorrichtung zur Aufnahme eines Informationsträgers, insbesondere einer topographischen Karte, mit einem den Informationsträger aufnehmenden, mit mindestens einem Sichtfenster und zwei drehbar gelagerten Wickelwalzen, an denen jeweils ein Ende des bahnförmig ausgebildeten, im Bereich zwischen den Wickelwalzen etwa parallel zum Sichtfenster geführten Informationsträgers festlegbar ist, versehenen Gehäuse.

Bei der aus DEB 28 51 386 bekannten Anordnung dieser Art dient dieses Gehäuse nicht nur zur Aufnahme des Informationsträgers, sondern auch der Handhabung des Informationsträgers. Sämtliche Bedienungseinrichtungen, wie die Antriebseinrichtung zur Betätigung der Wickelwalzen, eine eventuell benötigte Beleuchtungseinrichtung und dergleichen sind daher in dieses Gehäuse integriert. Die Aufnahmefähigkeit eines derartigen Gehäuses ist aber dennoch beschränkt. Sofern mehr Informationen benötigt werden, als auf dem in einem derartigen Gehäuse unterzubringenden Informationsträger aufgenommen werden können, müssen daher mehrere derartiger Gehäuse zur Verfügung stehen. Jedes dieser Gehäuse benötigt dann sämtliche Bedienungseinrichtungen, wie Antriebseinrichtungen, Beleuchtungseinrichtungen und
dergleichen. Die bekannte Anordnung führt daher zu
einem sehr hohen Aufwand und damit zu einer schlechten Wirtschaftlichkeit. Ganz abgesehen davon ist jedoch die Handhabung der bekannten Anordnung schwierig und z.B. vom Lenker eines Fahrzeugs während der
Fahrt gar nicht zu bewerkstelligen, da zum Halten
und Bedienen der bekannten Anordnung praktisch zwei
Hände benötigt werden. Die bekannte Anordnung macht
daher normalerweise häufige Unterbrechungen der
Fahrt zum Zwecke der Benutzung des Informationsträgers erforderlich. Eine permanente Kontrolle der
Reiseroute durch den Fahrzeuglenker ist hierbei
praktisch nicht möglich. Die Folge davon kann sein,
daß trotz häufigen Anhaltens und Nachschauens Abzweigungen versäumt werden und dergleichen.

Hiervon ausgehend ist es daher die Aufgabe der vorliegenden Erfindung, eine Vorrichtung eingangs erwähnter Art in Vorschlag zu bringen, die nicht nur
eine schnelle und laufende Information und Orientierung über den Reisestand ermöglicht, sondern die
gleichzeitig auch vom Fahrzeuglenker selbst während
der Fahrt leicht und einfach bedienbar ist und bei
der dennoch der erforderliche Aufwand in Grenzen
bleibt, und zwar auch dann, wenn mehrere Informationsträger benötigt werden.

Diese Aufgabe wird erfindungsgemäß dadurch gelöst,
daß das den Informationsträger aufnehmende Gehäuse
als Kassette ausgebildet ist, die in einen mit solchen Kassetten wahlweise beschickbaren, in einem
Fahrzeug im Sichtbereich des Fahrzeuglenkers angeordneten Kassettenhalter einlegbar ist, der mit einem Kassettenaufnahmeraum und mit einer mit den Wickelwalzen der jeweils eingelegten Kassette kuppelbaren Antriebseinrichtung zum Vor- und Rücktransport des von der Wickelwalze abwickelbaren und auf die jeweils andere Wickelwalze aufwickelbaren Informationsträgers versehen ist.

Die in den Kassettenträger wahlweise einsetzbaren Kassetten können verschiedene Informationen, z.B. verschiedene Karten, enthalten, was einen hohen Informationsstand gewährleistet. Dennoch wird jedoch lediglich ein Kassettenträger benötigt. Der praktisch fahrzeugfest anzuordnende Kassettenträger ermöglicht nicht nur eine sehr einfache Handhabung, sondern stellt gleichzeitig sicher, daß die jeweils eingestellte Information, z.B. der eingestellte Kartenabschnitt, permanent dargeboten werden, so daß auf einfache Weise eine laufende Orientierung möglich ist. Gleichzeitig können hierbei in vorteilhafter Weise sämtliche Bedienungs- und Handhabungsarmaturen, wie z.B. eine Antriebseinrichtung zum Antrieb der Wickelwellen, eine Beleuchtungseinrichtung zur Beleuchtung des Informationsträgers und dergleichen auf dem Kassettenträger vorgesehen werden. Die unter Umständen in einer Vielzahl vorhandenen Kassetten benötigen daher derartige Armaturen nicht. Vielmehr genügt es, wenn diese auf dem Kassettenträger einmal zur Verfügung stehen. Die Kassetten, die zum wechselweisen Einsatz und Austausch bestimmt sind, stellen daher vergleichsweise einfache Bauteile dar, die kostengünstig herstellbar sind, was insgesamt eine ausgezeichnete Wirtschaftlichkeit der Gesamtanordnung aus Kassettenträger und Kassetten ergibt. Die Kassetten können dabei in vor-

4

teilhafter Weise als einfache Wegwerfartikel ausgebildet werden. Kassetten mit veralteten Informationsträgern, etwa überholten Karten oder dergleichen, können einfach weggeworfen und durch Kassetten mit neuen Informationsträgern ersetzt werden, die in den Kassettenhalter einlegbar sind. Der fahrzeugfest angeordnete Kassettenhalter gewährleistet aber nicht nur eine hohe Wirtschaftlichkeit der benötigten Armaturen und eine einfache Ablesbarkeit, sondern ermöglicht in vorteilhafter Weise auch eine einfache Versorgung der erfindungsgemäßen Anordnung mit der benötigten Energie, indem einfach die hierfür benötigten Leitungen zu einer fahrzeugeigenen Energiestation, etwa zur Fahrzeugbatterie geführt werden, was den erforderlichen Aufwand weiter reduziert, da keine eigene Energiestation erforderlich ist. Gleichzeitig läßt sich der erfindungsgemäße Kassettenhalter auf einfache Weise so anordnen, daß die Informationen einwandfrei ablesbar sind und eine einfache Bedienung, etwa durch Knopfdruck, möglich ist, was eine Benutzung während der Fahrt und damit eine laufende Orientierung ermöglicht, wodurch sich die Gesamtfahrzeug in vorteilhafter Weise nicht unbeträchtlich verkürzen und die Verkehrssicherheit stark erhöhen kann.

In vorteilhafter Ausgestaltung der übergeordneten Maßnahmen kann die Kassette im Bereich der wickelwalzenparallelen Kanten des Sichtfensters mit dem Informationsträger zugeordneten Umlenkeinrichtungen versehen sein. Hierdurch ist sichergestellt, daß die Sichtfensterfläche vollständig genutzt wird, so daß man insgesamt mit einer verhältnismäßig kompakten Baugröße auskommt. In vorteilhafter Weise kann die Kassette im Bereich des Sichtfensters mit einer den von den Wickelwalzen freigegebenen Abschnitt des Informationsträgers untergreifenden Auflegeplatte versehen sein, deren wickelwalzenparallele Kanten als Umlenkeinrichtung ausgebildet sind. Diese Maßnahmen ergeben eine besonders einfache Ausgestaltung der Umlenkeinrichtung, wobei die hier vorgesehene Auflageplatte gleichzeitig Aufzeichnungen auf dem Informationsträger, wie z.B. die Markierung einer ausgesuchten Reiseroute, ermöglicht.

Gemäß einer weiteren zu bevorzugenden Ausgestaltung der übergeordneten Maßnahmen kann der Informationsträger aus durchscheinendem Material bestehen und vom Innenraum der Kassette her beleuchtbar sein. Diese Maßnahmen ermöglichen eine bequeme Benutzung der erfindungsgemäßen Vorrichtung auch bei Dunkelheit. Zweckmäßig kann hierzu die der Auflageplatte gegenüberliegende Rückwand der Kassette mit einem Beleuchtungsfenster versehen sein, in welches eine im Kassettenaufnahmeraum des Kassettenhalters angeordnete Beleuchtungseinrichtung eingreift. Die Auflageplatte besteht bei einer derartigen Ausführung aus durchscheinendem, vorzugsweise durchsichtigem Material.

Eine weitere Fortbildung der übergeordneten Maßnahmen kann darin bestehen, daß den Wickelwalzen jeweils eine Bremsvorrichtung zugeordnet ist. Hierdurch ist sichergestellt, daß ein selbsttätiges Lockern der auf den Wickelwalzen aufgenommenen Wicklungen unterbleibt, so daß bei einer Betätigung der Wickelwalzen sofort eine exakte Verstellung des bahnförmigen Informationsträgers erfolgt. Zur Bildung der Bremsvorrichtung können zweckmäßig am

6

äußeren Wickelumfang jeweils anliegende Bremsbacken vorgesehen sein, die durch jeweils eine Stellfeder verstellbar sind.

Eine weitere besonders zvorteilhafte Fortbildung der übergeordneten Maßnahmen kennzeichnet sich dadurch, daß der Kassettenhalter mit einem den Wickelwalzen zugeordneten Antriebsmotor versehen ist, der wahlweise mit einer der Wickelwalzen kuppelbar ist. Diese Ausgestaltung ermöglicht in vorteilhafter Weise ein motorisches Abspulen des bahnförmigen Informationsträgers und gewährleistet so eine besonders einfache und bequeme Bedienung sowie besonders kurze Ein- bzw. Verstellzeiten. In zweckmäßiger Ausgestaltung dieses Gedankens kann der Antriebsmotor verstellbar gelagert und mit einem Schneckenstummel versehen sein, der zwischen zwei mit gegenseitigem Abstand angeordnete, jeweils einer Wickelwalze zugeordnete Antriebsräder hineinragt und durch Verschieben des Antriebsmotors parallel zu der die Wellenstummelachse und die Mittelebenen der Antriebsräder enthaltenden Ebene alternativ hiermit zum Eingriff bringbar ist. Hierbei ist sichergestellt, daß man praktisch mit einem einfachen, nicht reversierbaren Motor auskommt und dennoch die beiden Wickelwalzen mit unterschiedlichem Drehsinn antreiben kann. Diese Fortbildung der übergeordneten Maßnahmen gewährleistet daher eine ausgezeichnete Wirtschaftlichkeit.

Weitere zweckmäßige Ausgestaltungen und vorteilhafte Weiterbildungen der übergeordneten Maßnahmen ergeben sich aus der nachstehenden Beschreibung eines Ausführungsbeispiels anhand der Zeichnung in Verbindung mit den restlichen Unteransprüchen.

In der Zeichnung zeigen:

Figur 1     eine Ansicht eines Pkw-Armaturenbretts
            mit einer erfindungsgemäßen Vorrichtung,

Figur 2     eine Explosionsdarstellung einer Kassette,

Figur 3     eine Explosionsdarstellung eines Kassettenhalters und

Figur 4     einen Kassettenhalter mit eingelegter
            Kassette teilweise im Schnitt.

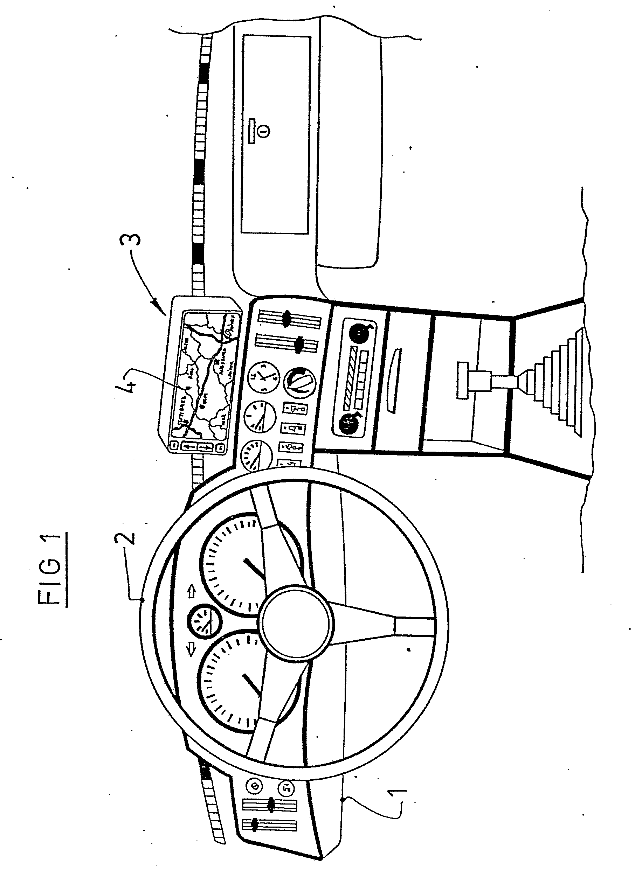

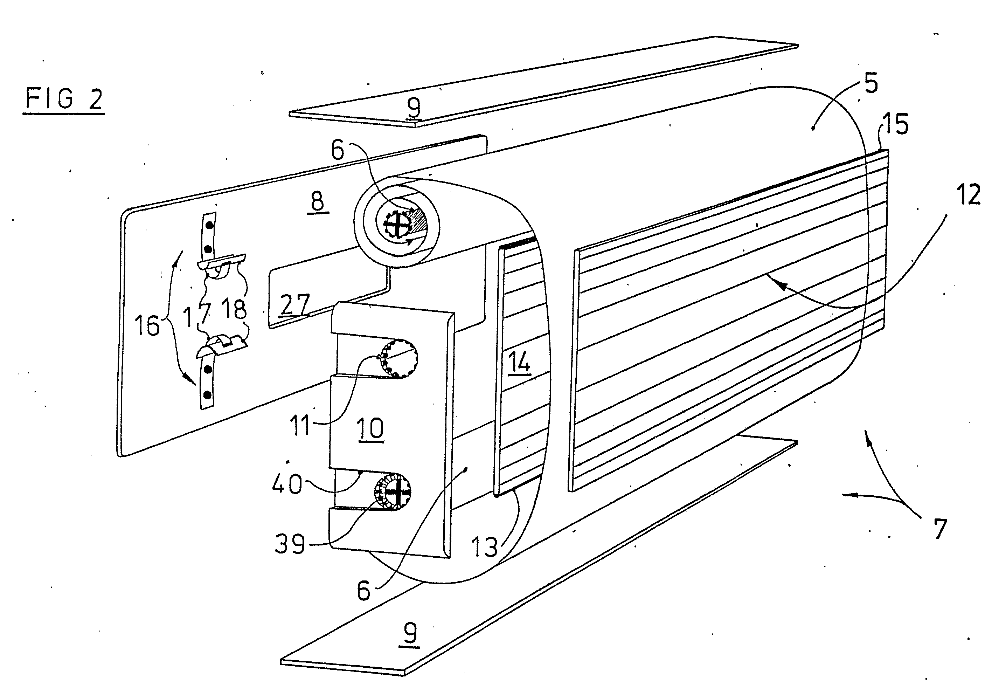

Bei dem in Figur 1 dargestellten Montagebeispiel ist auf das Armaturenbrett 1 seitlich vor dem Steuerrad 2, also im Sichtbereich des hinter dem Steuerrad 2 sitzenden Fahrzeuglenkers, eine als Ganzes mit 3 bezeichnete Vorrichtung zur Aufnahme einer Straßenkarte 4 angedeutet. Diese ist, wie am besten aus Figur 2 erkennbar ist, auf einen bahnförmigen Informationsträger 5, etwa eine Papier- oder Kunststoff-Folienbahn, aufgedruckt, der mit seinen Enden auf drehbar gelagerten Wickelwalzen 6 aufgenommen ist. Durch entsprechende Betätigung der Wickelwalzen 6 kann daher der Informationsträger von der einen Wickelwalze abgespult und auf die andere Wickelwalze aufgenommen werden und umgekehrt, wobei im Bereich zwischen den beiden Wickelwalzen der gewünschte Kartenabschnitt in Erscheinung tritt. Dies ermöglicht eine schnelle und einfache Orientierung bzw. Routenkontrolle während der Fahrt, ohne Fahrtunterbrechung. Die Vorrichtung 3 kann zweckmäßig schwenkbar angeordnet sein, so daß eine genaue Einstellung auf die individuellen Verhältnisse des jeweiligen Fahrzeuglenkers möglich ist. Bei dem in Figur 1 dargestellten Ausführungsbeispiel ist die Vorrichtung 3 auf das Armaturenbrett 1 aufgesetzt, was eine einfache Nachrüstung bereits vorhandener Fahrzeuge ermöglicht. Es ist aber auch ohne weiteres denkbar, bei Neufahrzeugen die Vorrichtung 3 direkt in das Armaturenbrett zu integrieren.

Zur Aufnahme der Wickelwalzen 6 und des Informationsträgers 5 ist eine der Figur 2 zugrunde liegende, als Ganzes mit 7 bezeichnete, kastenförmige Kassette vorgesehen, die aus einer Rückwand 8 und jeweils zwei hieran sich anschließenden Längswandungen 9 und Stirnwandungen 10 besteht. Diese Kassettenwandungen sind in

9

Figur 2 als lösbar aneinander festlegbare Teile dargestellt. In der Praxis kann die Kassette 7 jedoch zweckmäßig als einteiliger Kunststoff-Spritzgußformling ausgebildet sein. Die Stirnwandungen 10 sind mit Ausnehmungen 11 zur Lagerung der Wickelwalzen 6 versehen.
Der vordere, der Rückwand 8 gegenüberliegende Bereich
der Kassette dient als Sichtfenster 12 zur Sichtbarmachung des hieran vorbeigeführten Kartenabschnitts.
Hierzu kann die kastenförmige Kassette 7 in dem der
Rückwand 8 gegenüberliegenden Bereich einfach offen
sein. Zur Bewerkstelligung einer sauberen Führung des
bahnförmigen Informationsträgers 5 im Bereich des
Sichtfensters 12 können im Bereich der oberen und der
unteren Kante des Sichtfensters 12 wickelwalzenparallele Umlenkeinrichtungen 13 vorgesehen sein. Bei dem in
Figur 2 dargestellten Ausführungsbeispiel ist im Bereich des Sichtfensters 12 eine mit ihren Stirnkanten
zweckmäßig in nicht dargestellten Nuten der Stirnwandungen 10 gelagerte Auflageplatte 14 vorgesehen, über
welche der von einer Wickelwalze 6 abwickelbare und
auf die andere Wickelwalze 6 aufwickelbare Informationsträger 5 hinweggeführt ist. Die Auflageplatte 14
bewerkstelligt eine Stabilisierung des von den Wickelwalzen 6 freigegebenen Abschnitts des Informationsträgers 5 gegen Druckbelastung und kann daher in vorteilhafter Weise als Schreibunterlage dienen, so daß auf
dem Informationsträger 5 individuelle Beschriftungen
möglich sind, z.B. die Markierung einer ausgesuchten
Reiseroute. Im dargestellten Ausführungsbeispiel sind
einfach die wickelwalzenparallelen Kanten der Auflageplatte 5 zur Bildung von Umlenkeinrichtungen 13 abgerundet, so daß der Informationsträger 5 hierüber sauber gleiten kann. Bei dem in Figur 2 dargestellten Ausführungsbeispiel ist das Sichtfenster 12 zur Bewerkstelligung einer weiteren Schonung des Informationsträgers 5 durch eine Scheibe 15 aus durchsichtigem Material ausgefacht, die unter Freilassung eines schmalen Laufspalts für den Informationsträger 5 vor der
Auflageplatte 14 angeordnet ist. Sofern eine derartige Scheibe 15 vorgesehen ist, ist diese zweckmäßig
abnehmbar gelagert.

Zur Bewerkstelligung einer straffen Führung des Informationsträgers 5 im Bereich des Sichtfensters 12 ist
den Wickelwalzen 6 jeweils eine als Ganzes mit 16 bezeichnete Bremsvorrichtung zugeordnet. Hierzu sind bei
dem in Figur 2 dargestellten Ausführungsbeispiel jeweils am äußeren Wickelumfang zur Anlage bringbare,
unter der Wirkung einer Stellfeder 17 stehende Bremsbacken 18 vorgesehen. Die Stellfedern 17 können dabei
als einfache gebogene Blattfedern ausgebildet sein,
die an der Rückwand 8 befestigt sind.

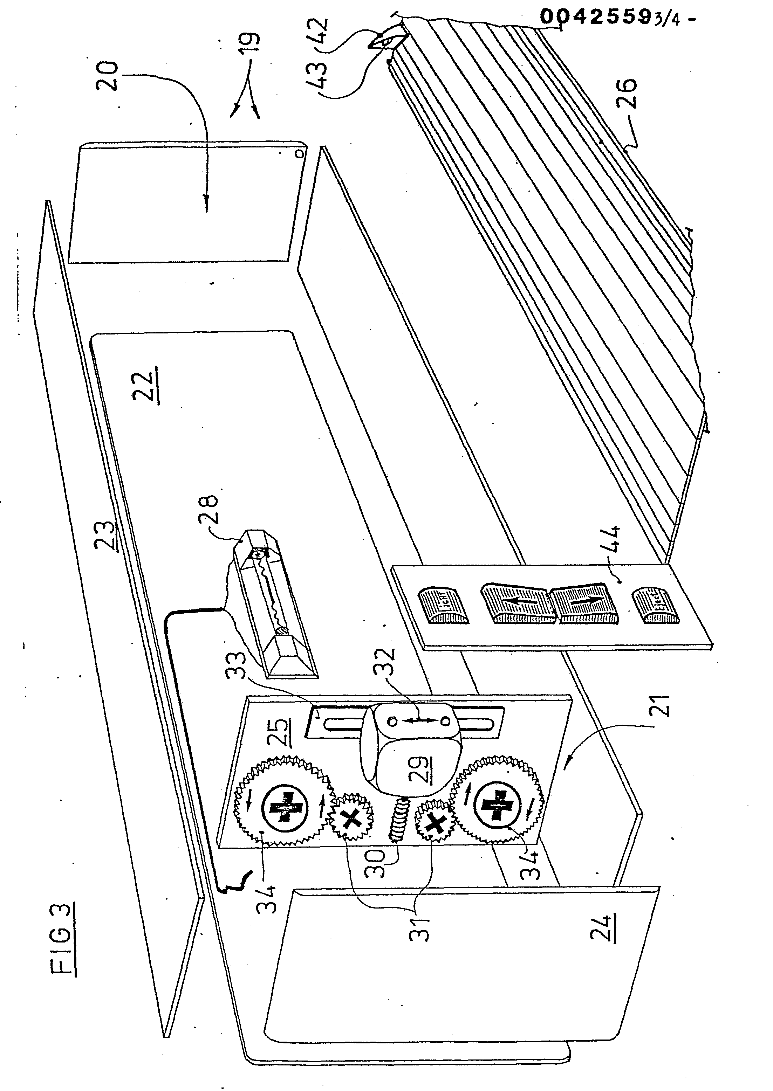

Die Kassette 7 ist als Wechselkassette im Austausch
gegen andere gleichartige Kassetten in einen der Figur 3 zugrunde liegenden, als Ganzes mit 19 bezeichneten Kassettenhalter einlegbar, der entsprechend der
Darstellung in Figur 1 am Armaturenbrett 1 befestigt
sein kann. Der Kassettenhalter 19 ist mit einem
Kassettenaufnahmeraum 20 und mit einer in einem neben dem Kassettenaufnahmeraum 20 angeordneten Antriebsraum 21 angeordneten, mit den Wickelwalzen 6
der jeweils eingelegten Kassette 7 kuppelbaren Antriebseinrichtung zum Transport des Informationsträgers 5 versehen. Der Kassettenhalter 19 wird
zweckmäßig durch einen kastenförmigen Kunststoff-
Spritzgußformling mit einer Rückwand 22 sowie hieran
sich anschließenden Längswandungen 23 und Stirnwandungen 24 sowie einer zwischen Kassettenaufnahmeraum 20
und Antriebsraum 21 angeordneten Trennwand 25 gebildet.

11

In Figur 3 sind diese Wandungen der Einfachheit halber als separate Teile dargestellt. Die Kassette 7 wird im dargestellten Ausführungsbeispiel einfach von vorne in den Kassettenaufnahmeraum 20 eingelegt. Zur Sicherung der eingelegten Kassette ist der Kassettenhalter 19 zweckmäßig mit einer den Kassettenaufnahmeraum 20 verschließenden Schwenkklappe 26 versehen, die gleichzeitig mit einer Auswurfklaue oder dergleichen versehen sein kann, wie weiter hinten noch näher beschrieben wird. Die Schwenkklappe 26 besteht aus durchsichtigem Material.

Um die Benutzung der erfindungsgemäßen Vorrichtung auch bei Dunkelheit zu gestatten bzw. zu erleichtern, ist das Sichtfenster 12 der Kassette 7 beleuchtbar. Im dargestellten Ausführungsbeispiel ist hierzu, wie am besten aus Figuren 2 und 3 erkennbar ist, die Kassettenrückwand 8 mit einem Beleuchtungsfenster 27 versehen, in welches beim Einlegen der Kassette 7 in den Kassettenaufnahmeraum 20 des Kassettenhalters 19 eine an der Rückwand des Kassettenaufnahmeraums 20 angeordnete Beleuchtungseinrichtung 28, hier in Form einer Stablampe, eingreift, welche den Kasetteninnenraum ausleuchtet. Die Auflageplatte 14 besteht bei einer derartigen Ausführung zweckmäßig aus durchscheinendem oder vorzugsweise durchsichtigem Material. Dasselbe gilt auch für den hier von hinten beleuchteten Informationsträger 5, der hier einfach durch eine Folienbahn aus durchsichtigem Kunststoff gebildet werden kann.

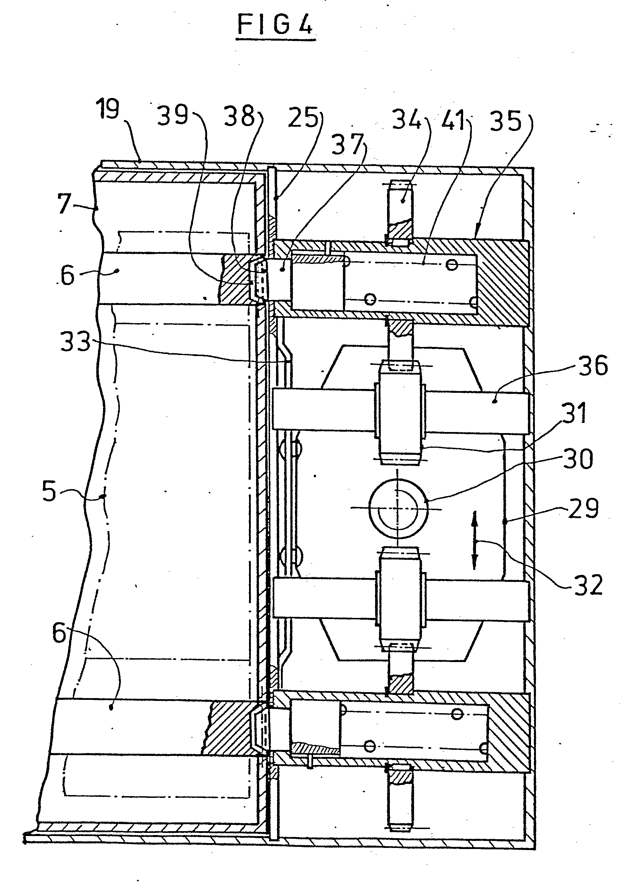

Der Antrieb der Wickelwalzen 6 kann von Hand bewerkstelligt werden. Bei einer derartigen Ausführungsform kann die Antriebseinrichtung einfach aus zweckmäßig an ihrem Umfang gerändelten Stellrädern bestehen, die mit
der jeweils zugeordneten Wickelwalze direkt oder unter
Zwischenschaltung eines Vorgeleges kuppelbar sind. Beim
dargestellten Ausführungsbeispiel ist der Kassettenhalter 19 mit einem Antriebsmotor 29 versehen, der verschiebbar an der Zwischenwand 25 gelagert ist und einen
Schneckenstummel bzw. eine Gewindespindel 30 aufweist
der bzw. die zwischen zwei jeweils einer Wickelwalze 6
zugeordnete Antriebsräder 31 hineinragt und durch Verschieben des Motors 29 in Richtung des Pfeils 32 hiermit alternativ zum Eingriff bringbar ist. Der Motor 29
ist dabei so angeordnet, daß die Achse des Schneckenstummels 30 und die Mittelebenen der Antriebsräder 31
in einer gemeinsamen Ebene liegen. Der Motor 29 benötigt
hierbei in vorteilhafter Weise lediglich eine Drehrichtung und ermöglicht dennoch eine Betätigung der Antriebsräder 31 mit jeweils unterschiedlicher Drehrichtung.
Zur Lagerung des Motors 29 kann, wie am besten aus Figur 4 erkennbar ist, zweckmäßig eine Schiene 33 vorgesehen sein, die mit Führungsschlitzen versehen ist, in
welchen motorseitige Führungsstifte selbsthemmend eingreifen. Die mit dem Schneckenstummel 30 kämmenden
Antriebsräder 31 können direkt mit jeweils einer zugeordneten Wickelwalze 6 kuppelbar sein. Im dargestellten Ausführungsbeispiel ist zur Bewerkstelligung einer
gewünschten Untersetzung der Motordrehzahl ein den
Wickelwalzen jeweils vorgeordnetes Vorgelege vorgesehen. Dieses besteht, wie die Figuren 3 und 4 erkennen lassen, im vorliegenden Fall aus jeweils einem Antriebsrad 31 und einem hiermit kämmenden Untersetzungsrad 34. Die die Vorgelege bildenden Zahnräder können
wie der Motor 29 fliegend an der Trennwand 25 gelagert
sein. Im dargestellten Ausführungsbeispiel sollen die
Antriebsräder 31 und die jeweils zugeordneten Untersetzungsräder 33 jeweils auf durchgehenden, den Antriebsraum 21 durchsetzenden Achsen 35 bzw. 36 gelagert sein.

Zur Übertragung der Antriebsbewegung vom Motor 29 bzw. von den diesem jeweils nachgeordneten Vorgelegen auf die Wickelwellen 6 sind im dargestellten Ausführungsbeispiel, wie am besten aus Figur 4 erkennbar ist, die den Untersetzungsrädern 34 jeweils zugeordneten Achsen 35 mit die Trennwand 25 durchsetzenden Antriebsstummeln 37 versehen, die stirnseitig mit einem hier durch eine Stirnverzahnung gebildeten Kupplungselement 38 versehen sind, das beim Einlegen einer Kassette in den Kassettenaufnahmeraum 20 mit einem entsprechenden, von der benachbarten Kassettenseite her zugänglichen Kupplungselement 39 im Bereich des antriebsseitigen Endes der jeweils zugeordneten Wickelwalze in Eingriff bringbar ist. Im dargestellten Ausführungsbeispiel ist dem als Stirnverzahnung ausgebildeten Kupplungselement 38 wickelwalzenseitig einfach eine innen verzahnte Tellerausnehmung zugeordnet. Im dargestellten Ausführungsbeispiel sind die drehfest mit den ihrerseits drehbar gelagerten, die Untersetzungsräder 34 drehfest aufnehmenden Achsen 35 verbundenen Antriebsstummel 37 in axialer Richtung verstellbar gelagert. Dies ermöglicht in vorteilhafter Weise eine gewisse Verdrängung der Antriebsstummel 37 beim Einlegen der Kassette 7 in den Kassettenaufnahmeraum 20. Dies kann durch im Bereich der motorseitigen Seitenwandung 10 der Kassette 7 angeordnete, von der Kassettenrückwand zu den wickelwellenseitigen Kupplungselementen 39 führende, in Figur 2 bei 40 angedeutete Führungsnuten erleichtert werden. Die Antriebsstummel 37 sind durch jeweils eine Ausrückfeder 41 an der jeweils zugeordneten Achse 35 abgestützt, so daß eine selbsttätige Ausrückung erfolgt, sobald die einander zugeordneten Kupplungselemente 38 und 39 eine fluchtende Stellung erreicht haben.

Zweckmäßig besitzt die Kassette 7 gegenüber dem Innenmaß des Kassettenaufnahmeraums 20 ausreichend Spiel, um ein einfaches Einlegen bzw. Wechseln der Kassette zu ermöglichen. Die während des Einlegvorgangs von den unter Federkraft stehenden, in den Kassettenaufnahmeraum 20 hineinragenden Antriebsstutzen 37 zunächst von der Trennwand 25 weggeschobene Kassette wird im eingeschobenen Zustand zweckmäßig an die Trennwand 25 angedrückt. Hierzu kann, wie am besten aus Figur 3 erkennbar ist, die Schwenkklappe 26 einfach im Bereich ihrer der Trennwand 25 gegenüberliegenden Kante mit einem keilförmigen Stellsegment 42 versehen sein, das beim Schließen der Stellklappe 26 die Kassette 7 an die Trennwand 25 annähert, wodurch ein exakter Kupplungseingriff im Bereich der Kupplungselemente 38 und 39 gewährleistet ist. Im dargestellten Ausführungsbeispiel ist das Stellsegment 42 mit einer Klaue 43 versehen, der kassettenseitig eine hier nicht näher dargestellte Mulde zugeordnet sein kann, so daß beim Öffnen der Schwenkklappe 26 ein automatischer Auswurf der eingelegten Kassette erfolgt. Die Schwenkklappe 26 kann ihrerseits zweckmäßig durch einen Schnappverschluß oder dergleichen verriegelbar sein. Der Antriebsraum 21 ist, wie Figur 3 am besten erkennen läßt, durch einen Deckel 44 verschlossen, der der Beleuchtungseinrichtung 28 sowie dem Motor 29 und einer für den Fall einer schwenkklappenlosen Ausführung eventuell vorgesehenen, durch einen Magnetanker oder dergleichen gebildeten Auswurfvorrichtung zugeordnete Betätigungsknöpfe trägt.

15

Anhand des geschilderten Ausführungsbeispiels ist erkennbar, daß dem praktisch stationär angeordneten
Kassettenträger eine Vielzahl von jeweils unterschiedliche Informationsträger aufnehmende Kassetten
zugeordnet sein können, die als Wechselkassetten bei
Bedarf wahlweise in den Kassettenträger einlegbar
sind.

Vorstehend ist zwar ein bevorzugtes Ausführungsbeispiel für einen Pkw näher erläutert. Es ist jedoch
ohne weiteres möglich, die erfindungsgemäße Vorrichtung beispielsweise zur Sichtbarmachung von auf
einem bahnförmigen Informationsträger aufgenommenen
Seekarten in einem Boot einzubauen. Mit besonderem
Vorteil kann der Informationsträger auch so gestaltet sein, daß neben den erwünschten topographischen
Daten gleichzeitig weitere Informationen erfolgen,
beispielsweise wichtige, am Weg liegende Adressen.

**0042559**

<u>A n s p r ü c h e</u>

1. Vorrichtung zur Aufnahme eines Informationsträgers, insbesondere einer topographischen Karte mit einem den Informationsträger (5) aufnehmenden, mit mindestens einem Sichtfenster (12) und zwei drehbar gelagerten Wickelwalzen, an denen jeweils ein Ende des bahnförmig ausgebildeten, im Bereich zwischen den Wickelwalzen (6) etwa parallel zum Sichtfenster (12) geführten Informationsträgers (5) festlegbar ist, versehenen Gehäuse, <u>dadurch gekennzeichnet, daß</u> das den Informationsträger (5) aufnehmende Gehäuse als Kassette (7) ausgebildet ist, die in einen mit solchen Kassetten wahlweise beschickbaren, in einem Fahrzeug im Sichtbereich des Fahrzeuglenkers angeordneten Kassettenhalter (19) einlegbar ist, der mit einem Kassettenaufnahmeraum (20) und mit einer mit den Wickelwalzen (6) der jeweils eingelegten Kassette (7) kuppelbaren Antriebseinrichtung zum Vor- und Rücktransport des von einer Wickelwalze (6) abwickelbaren und auf die jeweils andere Wickelwalze (6) aufwickelbaren Informationsträgers (5) versehen ist.

2. Vorrichtung nach Anspruch 1, <u>dadurch gekennzeich-</u>

net, daß die Kassette (7) im Bereich des Sichtfensters (12) mit einer den von den Wickelwalzen (6) freigegebenen Abschnitt des Informationsträgers (5) untergreifenden Auflageplatte (14) versehen ist, deren wickelwalzenparallele Kanten als im Bereich der wickelwalzenparallelen Kanten des Sichtfensters (12) vorzugsweise vorgesehene, dem Informationsträger (5) zugeordnete Umlenkeinrichtung (13) ausgebildet sind.

3. Vorrichtung nach wenigstens einem der vorhergehenden Ansprüche, dadurch gekennzeichnet, daß der Informationsträger (5) und gegebenenfalls die Auflageplatte (14) aus durchscheinendem, vorzugsweise durchsichtigem Material bestehen und vom Kassetteninnenraum her beleuchtbar sind.

4. Vorrichtung nach Anspruch 3, dadurch gekennzeichnet, daß die der aus lichtdurchlässigem Material bestehenden Auflageplatte (14) gegenüberliegende Kassettenrückwand (8) mit einem Beleuchtungsfenster (27) versehen ist, in das eine im Kassettenaufnahmeraum (20) des Kassettenhalters (19) angeordnete Beleuchtungseinrichtung (28) eingreift.

5. Vorrichtung nach wenigstens einem der vorhergehenden Ansprüche, dadurch gekennzeichnet, daß den Wickelwalzen (6) jeweils eine Bremsvorrichtung (16) zugeordnet ist, die vorzugsweise am äußeren Wickelumfang jeweils anliegende Bremsbacken (18) aufweist, die durch jeweils eine vorzugsweise als an der benachbarten Kassettenwandung befestigte Blattfeder ausgebildete

3

Stellfeder (17) verstellbar ist.

6. Vorrichtung nach wenigstens einem der vorhergehenden Ansprüche, dadurch gekennzeichnet, daß der Kassettenhalter (19) mit einem den Wickelwalzen (6) zugeordneten Antriebsmotor (29) versehen ist, der wahlweise mit einer der Wickelwalzen (6) kuppelbar ist, wobei der Antriebsmotor (29) vorzugsweise verstellbar gelagert und mit einem Schneckenstummel (30) versehen ist, der zwischen zwei mit gegenseitigem Abstand angeordnete, jeweils einer Wickelwalze (6) zugeordnete Antriebsräder (31) hineinragt und durch Verschieben des Antriebsmotors (29) parallel zu der die Wellenstummelachse und die Mittelebenen der beiden Antriebsräder (31) enthaltenden Ebene alternativ mit einem der Antriebsräder (31) zum Eingriff bringbar ist.

7. Vorrichtung nach Anspruch 6, dadurch gekennzeichnet, daß der Kassettenhalter (19) mit einem neben dem Kassettenaufnahmeraum (20) angeordneten Antriebsraum (21) versehen ist, daß die zwischen Kassettenaufnahmeraum und Antriebsraum angeordnete Trennwand (25) von den Wickelwalzen (6) jeweils zugeordneten, durch die Antriebsräder (31) antreibbaren Antriebsstummeln (37) durchsetzt ist, wobei das antriebsraumseitige Ende der Wickelwalzen (6) mit jeweils einem, von der Kassettenaußenseite her zugänglichen Kupplungselement (39) versehen ist, das beim Einlegen der Kassette (7) in den Kassettenhalter (19) mit einem entsprechenden Kupplungselement (38) des jeweils zugeordneten, vorzugs-

4

weise entgegen der Kraft einer zugeordneten Ausrückfeder (41) axial verschiebbar gelagerten Antriebsstummels (37) in Eingriff bringbar ist, und daß im Bereich der antriebsraumseitigen Kassettenseitenwandung von der Kassettenrückwand zu den Kupplungselementen (39) führende, den Antriebsstummeln (37) zugeordnete Führungsnuten (40) vorgesehen sind.

8. Vorrichtung nach wenigstens einem der vorhergehenden Ansprüche, dadurch gekennzeichnet, daß die in den vorzugsweise mit einer Kassettenauswurfeinrichtung versehenen Kassettenhalter (19) jeweils eingelegte Kassette (7) gegen Verrutschen gesichert ist.

9. Vorrichtung nach Anspruch 8, dadurch gekennzeichnet, daß der Kassettenhalter (19) mit einer den Kassettenaufnahmeraum (20) verschließenden, verriegelbaren Schwenkklappe (26) aus durchsichtigem Material versehen ist, die vorzugsweise mit einem keilförmigen Stellsegment (42) versehen ist, das eine in eine kassettenseitig vorgesehene Mulde eingreifende Auswurfklaue (43) aufweist.

10. Vorrichtung nach wenigstens einem der vorhergehenden Ansprüche, dadurch gekennzeichnet, daß der Kassettenhalter (19) vorzugsweise schwenkbar im Bereich des Fahrzeugarmaturenbretts (1) angeordnet ist.

FIG 1

0042559

FIG 2

FIG 3

FIG 4

0042559

## EUROPÄISCHER RECHERCHENBERICHT

Europäisches Patentamt

| EINSCHLÄGIGE DOKUMENTE | | | KLASSIFIKATION DER ANMELDUNG (Int. Cl.3) |
|---|---|---|---|
| Kategorie | Kennzeichnung des Dokuments mit Angabe, soweit erforderlich, der maßgeblichen Teile | betrifft Anspruch | G 09 B 29/06 |
| X | US - A - 3 583 086 (DAVID FINE)<br><br>* Spalte 3, Zeilen 8-75; Spalte 4, Zeilen 1-7, 40-75; Spalte 5, Zeilen 1-3, 25-36, 69-75; Abbildungen 1,2,4-7 * | 1,2,3,4 | |
| X | DE - A - 2 842 200 (KLEIN, HEINRICH GEORG)<br><br>* Seite 6, Zeile 37; Seite 7, Zeilen 1-19; Abbildungen 1,2 * | 1 | |
| | FR - A - 2 406 268 (LUDEMANN OTTO)<br><br>* Ansprüche; Abbildung 1 * | 1 | RECHERCHIERTE SACHGEBIETE (Int. Cl.3)<br><br>G 09 B 29/06 |
| | FR - A - 2 125 751 (CRISTEA ANDRE)<br><br>* Seite 3, Zeilen 7-8; Abbildung 10 * | 5 | |
| | FR - A - 388 985 (ANTOINE DECHE-LETTE)<br><br>* Seite 1, Zeilen 48-58; Seite 2, Zeilen 1-21; Abbildungen 1-3 * | 6,7 | |
| P,E | DE - A - 2 913 827 (BETSCHART, AN-TON PETER)<br><br>* Ansprüche; Abbildungen 1-3 * | 1 | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 22-09-1981 | MIOT |

EPA form 1503.1 06.78